# EUROPEAN PATENT APPLICATION

(11) **EP 2 246 816 A1**
(43) Date of publication of application: **03.11.2010**
(21) Application number: 10250832.2
(22) Date of filing: 27.04.2010
(51) Int. Cl.: G06Q 40/00

(54) **Customer-defined account management rules for improved linked financial institution account management**

(30) Priority: 27.04.2009 US 430612
(71) Applicant: Bank of America Corporation, Charlotte, NC 28255 (US)
(72) Inventor: Ghosh, Debashis, Charlotte North Carolina 28255 (US); Newman, Kurt D., Charlotte North Carolina 28255 (US); Joa, David, Charlotte North Carolina 28255 (US); Sudeshna, Banerjee, Charlotte North Carolina 28255 (US); Yanghong, Shao, Charlotte North Carolina 28255 (US); Krein, Mark V., Charlotte North Carolina 28255 (US); Thayer, Allison, Charlotte North Carolina 28255 (US)
(74) Representative: Kinsler, Maureen Catherine

(57) **Abstract**

Systems, methods, and computer program products are provided for customer-defined financial institution account management rules associated with linked financial institution accounts. The methods, systems and computer program products herein described allow the customer to define rules that maximize the customer's rate of return and/or minimizing the likelihood of insufficient funding of an account leading to an overdraft. Thus, poor utilization of cash in terms of excessive balances in non-interest bearing accounts or low-interest bearing accounts is minimized by automatically transferring, based on a customer-defined rules, the funds to a higher rate of return account. Additionally, managing a primary payment account, such as a checking or bill account, is addressed so as to ensure that funds are sufficient to cover the customer's expenditures.

## Description

### REFERENCE TO CO-PENDING APPLICATION FOR PATENT

The present Application for Patent is related to co-pending United States Patent Application entitled, "Financial Institute-Implemented Account Management System", inventors Ghosh, et al., U.S. Serial No. 12/430,706, filed on April 27, 2009, assigned to the assignee hereof, and expressly incorporated by reference herein.

### FIELD

In general, embodiments herein disclosed relate to systems, methods, and computer program products for managing financial institution accounts and, more specifically, managing financial institution accounts through the use of customer-defined account management rules for use with linked financial institution accounts.

### BACKGROUND

Many financial institution customers, such as bank customers have difficulty managing their various bank or financial institution accounts. This problem is especially evident with management of checking and/or bill pay accounts to ensure that current balances are sufficient to cover account expenditures. As a result, if the customer makes expenditures from an account that is not properly funded, the customer may incur undesirable overdraft fees associated with bank or financial institution having to properly fund the account after the expenditure has incurred. While access to account management has become more prevalent recently due to the inception of different banking channels, such as Automated Teller Machines (ATMs), online banking and such, the customer still has to dedicate a certain amount of time, on a regular basis, to account management to ensure that accounts are properly funded to protect against overdrafts or the like.

In addition, to managing financial institution accounts to ensure against overdrafts, customers have a desire to maximize the rate of return on their account balances. In this regard, a customer would rather have their non-utilized or excessive funds in a high-interest bearing account, such as a savings account or a money market account, as opposed to a low-interest bearing account, such as a checking account or the like. However, since managing accounts to ensure maximum rate of return is typically directly opposed to managing accounts to ensure against overdrafts, the customer must dedicate even a greater amount of time to account management in order to create the proper balance between ensuring maximum rate of return and protecting against overdrafts.

Therefore, a need exists to improve customer management of financial institution accounts. The desired invention should provide for an increase in the customer's rate of return by ensuring that account balances are managed so to provide for excessive balances in high interest bearing accounts as opposed to low interest bearing accounts. Additionally, a need exists to ensure that customer accounts, such as checking account, bill pay accounts and the like, are sufficiently funded to cover any and all expenditures or debits made from the accounts. In this regard, the desired invention should significantly reduce the number of customer overdrafts, and related overdraft fees, by providing for alternate means of funding the payment account.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

Methods, systems and computer program products are defined that provide customer-defined financial institution account management rules associated with linked financial institution accounts. The methods, systems and computer program products herein described allow the customer to define rules that maximize the customer's rate of return and/or minimizing the likelihood of insufficient funding of an account leading to an overdraft. In this regard, maximizing the customer's rate of return is accomplished by customer-defined maximum limits for low interest bearing accounts such that amounts beyond what is needed in the account are automatically transferred to higher-interest bearing accounts. Additionally, minimizing the likelihood of insufficient funding of an account is accomplished by customer defined rules designating transfer accounts for transferring funds to a payment account if the payment account has insufficient funds to satisfy an outstanding payment. In the same regard, customer-defined minimum limits may be set on payment accounts, such as checking accounts, bill pay accounts or the like to ensure that such accounts are always properly funded. Once the customer-defined account management rules have been set, funds are automatically managed so as to eliminate any further intervention by the customer in managing the financial institution accounts.

According to one embodiment of the invention, a method is defined for managing financial institution accounts. The method includes receiving one or more financial institution account link requests and providing for one or more financial institution account links based on the one or more link requests. Each link request provides for linking two or more financial institution accounts associated with either an individual customer or a business customer. In accordance with alternate embodiments, the financial institution accounts may be with a single financial institution or more than one financial institution. The method additionally includes receiving one or more customer-defined account management rules associated with two or more of the linked financial institution accounts and storing the one or more account management rules in a customer profile associated with the customer. At least one of the customer-defined account management rules is operable to maximize the customer's rate of return associated with the plurality of linked financial institution accounts. Additionally, the method includes managing funds in the plurality of linked financial institution accounts based on the customer-defined account management rules.

According to one embodiment of the method, receiving one or more customer-defined account management rules further includes receiving at least one account management rule that establishes a maximum balance limit for one or more financial institution accounts and designates one or more financial institution accounts as the transferee account if the maximum balance limit is met. In this regard, the account having the maximum balance limit may be a low interest bearing account, such as a checking account, bill pay account or the like, and the designated transferee account may be a higher interest bearing account such as a savings account, money market account or the like. In such embodiments, managing funds in the plurality of linked financial institution accounts based on the rules may further include determining that the established maximum balance limit associated with a financial institution account has been met, and automatically transferring funds in excess of the maximum balance limit to the designated financial institution transferee account based on the maximum balance limit having been met. According to further alternate embodiments the maximum balance limit may be a predetermined dollar amount or the maximum limit may be a percentage in excess of a predetermined current account need amount. In such embodiments, the method may further include determining the customer's current account need amount based on previous account usage patterns.

According to another embodiment of the method receiving one or more customer-defined account management rules further includes receiving at least one account management rule that establishes a minimum balance limit for one or more financial institution customer accounts and designates a financial institution account priority for transferring funds from a prioritized financial institution account if the established minimum balance limit is met. In such embodiments, managing funds in the plurality of linked financial institution accounts based on the account management rules further includes determining that the minimum balance limit associated with a financial institution account has been met, determining the designated financial institution account priority for transferring funds to the financial institution account and transferring funds to the financial institution account in accordance with the designated financial institution account priority.

In a still further embodiment of the method, receiving one or more customer-defined account management rules further includes receiving at least one account management rule that establishes financial institution account transfer priority for one or more payment accounts if the payment account is unable to fund an expenditure. In one further embodiment, financial institution account transfer priority is established based on payment account type. In such embodiments, managing funds in the plurality of linked financial institution accounts based on the account management rules further includes determining that the payment account is unable to fund an expenditure, determining the established financial institution account transfer priority for the payment account, transferring funds to the payment account based on the transfer priority and providing payment for the expenditure after transferring funds to the payment account.

Additionally, according to another embodiment of the method, receiving one or more customer-defined account management rules further includes receiving one or more customer-selected account management rules. In such embodiments, the customer-selected account management rules may be selected from a customer-accessible financial institution repository of rules. In one specific embodiment, the repository presents the customer with the most-popular user defined rules and/or financial institution recommended rules, which may be customer-specific recommended rules based on customer account types, account balance history/trends and the like.

Another method for managing financial institution accounts defines a further embodiment of the invention. The method includes receiving one or more financial institution account link requests and providing for one or more financial institution account links based on the one or more link requests. Each link request provides for linking two or more financial institution accounts associated with either an individual customer or a business customer. In accordance with alternate embodiments, the financial institution accounts may be with a single financial institution or more than one financial institution. The method additionally includes receiving one or more customer-defined account management rules associated with two or more of the linked financial institution accounts and storing the one or more account management rules in a customer profile associated with the customer. At least one of the customer-defined account management rules is operable to ensure adequate fund availability in one or more of the plurality of linked financial institution accounts for the purpose of funding an expenditure. Additionally, the method includes managing funds in the plurality of linked financial institution accounts based on the customer-defined account management rules.

According to an alternate embodiment of the method, receiving one or more customer-defined account management rules may further include receiving at least one account management rule that establishes financial institution account transfer priority for one or more financial institution accounts in an event that a payment account is unable to fund an expenditure. In one such embodiment, financial institution account transfer priority is established based on payment account type. According to another alternate embodiment of the method, receiving at least one account management rule that establishes financial institution account transfer priority may further include receiving at least one account management rule that designates a primary, a secondary and/or a tertiary financial institution account for transfer priority in the event that the payment account is unable to fund an expenditure. In such embodiments, receiving at least one account management rule that establishes financial institution account transfer priority may further include receiving the at least one account management rule that establishes financial institution account transfer priority and designates each prioritized financial institution account as either being responsible for transferring a portion of the expenditure amount that the payment account is unable to fund or an entire expenditure amount. In such alternate embodiments of the method, managing funds in the plurality of linked financial institution accounts based on the account management rules may further include determining that the payment account is unable to fund an expenditure, determining the established financial institution account transfer priority for the payment account, transferring funds to the payment account based on the transfer priority and providing payment for the expenditure after transferring funds to the payment account.

Receiving one or more customer-defined account management rules may further comprise receiving at least one account management rule that establishes financial institution account transfer priority for one or more financial institution payment accounts based on payment account type.

Receiving at least one account management rule that establishes financial institution account transfer priority may further comprise receiving the at least one account management rule that establishes financial institution account transfer priority, wherein the prioritized financial institution accounts are associated with more than one financial institution.

Additionally, in such alternate embodiments in which managing funds includes transferring funds to the payment account based on the transfer priority, the method may also include providing for a payment hold period if a determination is made that insufficient funds are currently available in the payment account to fund the expenditure. The payment hold period may be a predetermined payment hold period or a dynamically determined payment hold period that takes into account the nature of the transferee account and/or any other factors that may influence transfer time.

In still other alternate embodiments of the method, receiving one or more customer-defined account management rules may further include receiving at least one account management rule that establishes a minimum balance limit for one or more financial institution customer accounts and designates a financial institution account transfer priority for transferring funds from one or more prioritized financial institution accounts if the established minimum balance limit is met. In such embodiment, managing funds in the plurality of linked financial institution accounts based on the account management rules may further include determining that the minimum balance limit associated with a financial institution account has been met, determining the designated financial institution account priority for transferring funds to the financial institution account and transferring funds to the financial institution account in accordance with the designated financial institution account priority.

Additionally, according to another embodiment of the method, receiving one or more customer-defined account management rules further includes receiving one or more customer-selected account management rules. In such embodiments, the customer-selected account management rules may be selected from a customer-accessible financial institution repository of rules. In one specific embodiment, the repository presents the customer with the most-popular user defined rules and/or financial institution recommended rules, which may be customer-specific recommended rules based on customer account types, account balance history/trends and the like.

Receiving one or more customer-selected account management rules may further comprises receiving the one or more customer-selected account management rules selected from a financial institution repository that provides for prioritizing the presentation of rules based on customer rule popularity.

Receiving one or more customer-selected account management rule may further comprise receiving the one or more customer-selected account management rules selected from a financial institution repository that provides for prioritizing the presentation of rules based on financial institution recommendation, wherein the recommendation is customer-specific.

Yet another embodiment of the invention is provided for by an apparatus for managing financial institution accounts. The apparatus includes a computer platform including at least one processor and a memory. The apparatus also includes an account linking module stored in the memory, executable by the at least one processor, and operable to receive one or more financial institution account linking requests, establish the one or more financial institution links, and store the links in a customer profile within a customer profile database. Each link provides for linking two or more financial institution accounts associated with an individual or business customer.

The apparatus also includes an account rules module stored in the memory, executable by the at least one processor, and operable to receive one or more customer-defined account rules associated with two or more of the linked financial institution accounts and store the rules in a customer profile associated with the customer. At least one of the customer-defined account rules is operable to maximize the customer's rate of return associated with the two or more of the linked financial institution accounts.

The apparatus also includes an account management module stored in the memory, executable by the at least one processor, and operable to manage funds in the plurality of financial institution customer accounts based on the account rules.

In accordance with alternate embodiments of the apparatus, the account rules module may be further operable to receive at least one account management rule that establishes a maximum balance limit for one or more financial institution accounts and designates one or more financial institution accounts as the transferee account if the maximum balance limit is met. In such embodiments, the account management module may be further operable to determine that the established maximum balance limit associated with a financial institution account has been met, and automatically transfer funds in excess of the maximum balance limit to the designated financial institution transferee account based on the maximum balance limit having been met. The maximum balance limit may be defined as a predetermined dollar amount, a percentage in excess of a determined current need amount or the like. In such embodiments, the account management module may be further operable to determine the customer's current need amount based on previous account usage patterns.

In accordance with still further alternate embodiments of the apparatus, the account rules module may be further operable to receive at least one account management rule that establishes a minimum balance limit for one or more financial institution customer accounts and designates a financial institution account priority for transferring funds from a prioritized financial institution account if the established minimum balance limit is met. In such embodiments, the account management module may be further operable to determine that the minimum balance limit associated with a financial institution account has been met, determine the designated financial institution account priority for transferring funds to the financial institution account and transfer funds to the financial institution account in accordance with the designated financial institution account priority.

In yet another alternate embodiment of the apparatus, the account rules module may be further operable to receive at least one account management rule that establishes financial institution account transfer priority for one or more payment accounts if the payment account is unable to fund an expenditure. In such embodiments, the account management module may be further operable to determine that the payment account is unable to fund an expenditure, determine the established financial institution account transfer priority for the payment account, transfer funds to the payment account based on the transfer priority and provide payment for the expenditure after transferring funds to the payment account.

Another apparatus for managing financial institution accounts provides a still further embodiment of the invention. The apparatus includes a computer platform including at least one processor and a memory. The apparatus also includes an account linking module stored in the memory, executable by the at least one processor, and operable to receive one or more financial institution account linking requests, establish the one or more financial institution links, and store the links in a customer profile within a customer profile database. Each link provides for linking two or more financial institution accounts associated with an individual or business customer.

The apparatus also includes an account rules module stored in the memory, executable by the at least one processor, and operable to receive one or more customer-defined account rules associated with two or more of the linked financial institution accounts and store the rules in a customer profile associated with the customer. At least one of the customer-defined account management rules is operable to ensure adequate fund availability in one or more of the plurality of linked financial institution accounts for the purpose of funding an expenditure.

The apparatus also includes an account management module stored in the memory, executable by the at least one processor, and operable to manage funds in the plurality of financial institution customer accounts based on the account rules.

The apparatus may comprise a computer platform including at least one processor and a memory; a customer profile database stored in the memory; an account linking module stored in the memory, executable by the at least one processor, and operable to receive one or more financial institution account linking requests and provide for one or more financial institution links, wherein each link provides for linking two or more financial institution accounts associated with a customer; an account rules module stored in the memory, executable by the at least one processor, and operable to receive one or more customer-defined account rules associated with two or more of the linked financial institution accounts and store the rules in a customer profile associated with the customer, wherein at least one of the customer-defined account management rules is operable to ensure adequate fund availability in one or more of the plurality of linked financial institution accounts for the purpose of funding an expenditure; and an account management module stored in the memory, executable by the at least one processor, and operable to manage funds in the plurality of financial institution customer accounts based on the account rules.

In alternate embodiment of the apparatus, the account rules module may be further operable to receive at least one account management rule that establishes financial institution account transfer priority for one or more financial institution accounts in an event that a payment account is unable to fund an expenditure. According to one embodiment, financial institution account transfer priority may be established based on payment account type. In another alternate embodiment, the account rules module may be further operable to receive at least one account management rule that designates one or more of a primary, a secondary or a tertiary financial institution account for transfer priority in the event that the payment account is unable to fund an expenditure. In such alternate embodiments, the account rules module may be further operable to receive the at least one account management rule that establishes financial institution account transfer priority and designates each prioritized financial institution account as either being responsible for transferring a portion of the expenditure amount that the payment account is unable to fund or an entire expenditure amount. Additionally, in such embodiments, the account management module may be further operable to determine that the payment account is unable to fund an expenditure, determine the established financial institution account transfer priority for the payment account, transfer funds to the payment account based on the transfer priority and provide payment for the expenditure after transferring funds to the payment account. The accounts rule module may be further operable to receive the at least one account management rule that establishes financial institution account transfer priority, wherein the prioritized financial institution accounts are associated with more than one financial institution.

In such alternate embodiments of the apparatus, in which the account management module is operable to transfer funds to the payment account based on the transfer priority, the account management module may be further operable to provide for a payment hold period if a determination is made that insufficient funds are currently available in the payment account to fund the expenditure. The payment hold period may be a predetermined payment hold period, a dynamically determined payment hold period or the like.

In a still further alternate embodiment of the apparatus, the account rules module may be further operable to receive at least one account management rule that establishes a minimum balance limit for one or more financial institution customer accounts and designates a financial institution account transfer priority for transferring funds from one or more prioritized financial institution accounts if the established minimum balance limit is met. In such embodiments, the account management module may be further operable to determine that the minimum balance limit associated with a financial institution account has been met, determine the designated financial institution account priority for transferring funds to the financial institution account and transfer funds to the financial institution account in accordance with the designated financial institution account priority.

The account rules module may be further operable to receive one or more financial institution account link requests, wherein each link request provides for linking two or more financial institution accounts associated with an individual customer or a business customer.

A computer program product that includes a computer-readable medium defines another embodiment of the invention. The medium includes a first set of codes for causing a computer to receive one or more financial institution account link requests and a second set of codes for causing a computer to provide for one or more financial institution account links based on the one or more link requests. Each link request provides for linking two or more financial institution accounts associated with an individual customer or a business customer. The medium additionally includes a third set of codes for causing a computer to receive one or more customer-defined account management rules associated with two or more of the linked financial institution accounts and a fourth set of codes for causing a computer to store the one or more account management rules in a customer profile associated with the customer. At least one of the customer-defined account management rules is operable to maximize the customer's rate of return associated with the plurality of linked financial institution accounts. Additionally, the medium includes a fifth set of codes for causing a computer to manage funds in the plurality of linked financial institution accounts based on the account management rules.

In one alternate embodiment of the computer program product, the third set of codes may be further operable to cause the computer to receive at least one account management rule that establishes a maximum balance limit for one or more financial institution accounts and designates one or more financial institution accounts as the transferee account if the maximum balance limit is met. In such embodiments, the fifth set of codes may be further operable to cause the computer to determine that the established maximum balance limit associated with a financial institution account has been met, and automatically transfer funds in excess of the maximum balance limit to the designated financial institution transferee account based on the maximum balance limit having been met. The maximum balance limit may be defined as a predetermined dollar amount, a percentage in excess of a determined current need amount or the like. In such embodiments, the medium may include a sixth set of codes for causing a computer to determine the customer's current need amount based on previous account usage patterns.

In another alternate embodiment of the computer program product, the third set of codes may be further operable to cause the computer to receive at least one account management rule that establishes a minimum balance limit for one or more financial institution customer accounts and designates a financial institution account priority for transferring funds from a prioritized financial institution account if the established minimum balance limit is met. In such embodiments, the fifth set of codes may be further operable to cause the computer to determine that the minimum balance limit associated with a financial institution account has been met, determine the designated financial institution account priority for transferring funds to the financial institution account and transfer funds to the financial institution account in accordance with the designated financial institution account priority.

In a still further alternate embodiment of the computer program product, the third set of codes is further operable to cause the computer to receive at least one account management rule that establishes financial institution account transfer priority for one or more payment accounts if the payment account is unable to fund an expenditure. In one such embodiment, financial institution account transfer priority may be based on payment account type. In such embodiments, the fifth set of codes may be further operable to cause the computer to determine that the payment account is unable to fund an expenditure, determine the established financial institution account transfer priority for the payment account, transfer funds to the payment account based on the transfer priority and providing payment for the expenditure after transferring funds to the payment account.

Another computer program product that includes a computer-readable medium defines yet another embodiment of the invention. The medium includes a first set of codes for causing a computer to receive one or more financial institution account link requests and a second set of codes for causing a computer to provide for one or more financial institution account links based on the one or more link requests. Each link request provides for linking two or more financial institution accounts associated with an individual customer or a business customer. The medium additionally includes a third set of codes for causing a computer to receive one or more customer-defined account management rules associated with two or more of the linked financial institution accounts and a fourth set of codes for causing a computer to store the one or more account management rules in a customer profile associated with the customer. At least one of the customer-defined account management rules is operable to ensure adequate fund availability in one or more of the plurality of linked financial institution accounts for the purpose of funding an expenditure. Additionally, the medium includes a fifth set of codes for causing a computer to manage funds in the plurality of linked financial institution accounts based on the account management rules.

According to an alternate embodiment of the computer program product, the third set of codes may be further operable to cause the computer to receive at least one account management rule that establishes financial institution account transfer priority for one or more financial institution accounts in an event that a payment account is unable to fund an expenditure. In one such embodiment, financial institution account transfer priority may be established based on payment account type. In another alternate embodiment of the computer program product, the third set of codes may be further operable to cause the computer to receive at least one account management rule that designates one or more of a primary, a secondary or a tertiary financial institution account for transfer priority in the event that the payment account is unable to fund an expenditure. In such embodiments, the fifth set of codes may be further operable to cause the computer to determine that the payment account is unable to fund an expenditure, determine the established financial institution account transfer priority for the payment account, transfer funds to the payment account based on the transfer priority and provide payment for the expenditure after transferring funds to the payment account.

In other alternate embodiments of the computer program product in which the fifth set of codes is further operable to cause the computer to transfer funds to the payment account based on the transfer priority, the fifth set of codes may further operable to cause the computer to provide for payment hold period if a determination is made that insufficient funds are currently available in the payment account to fund the expenditure. The payment hold period may be a predetermined payment hold period, a dynamically determined payment hold period or the like.

Thus, embodiments are defined that provide customer-defined financial institution account management rules associated with linked financial institution accounts. The methods, systems and computer program products herein described allow the customer to define rules that maximize the customer's rate of return and/or minimizing the likelihood of insufficient funding of an account leading to an overdraft. Thus, the invention seeks to solves the problem of poor utilization of cash in terms of excessive balances in non-interest bearing accounts or low-interest bearing accounts where the cash could be better served earning a higher rate of return in a different account, such as a savings, money market or other similar account. Additionally, the invention seeks to solve the problem of managing a primary payment account such as a checking or bill account, to ensure that funds are sufficient to cover the customer's expenditures.

In yet another alternate embodiment of the computer program product, the third set of codes may be further operable to cause the computer to receive at least one account management rule that establishes a minimum balance limit for one or more financial institution customer accounts and designates a financial institution account transfer priority for transferring funds from one or more prioritized financial institution accounts if the established minimum balance limit is met. In such embodiments, the fifth set of codes may be further operable to cause the computer to determine that the minimum balance limit associated with a financial institution account has been met, determine the designated financial institution account priority for transferring funds to the financial institution account and transfer funds to the financial institution account in accordance with the designated financial institution account priority.

To the accomplishment of the foregoing and related ends, the one or more embodiments comprise the features hereinafter fully described and particularly pointed out in the claims. The following description and the annexed drawings set forth in detail certain illustrative features of the one or more embodiments, These features are indicative, however, of but a few of the various ways in which the principles of various embodiments may be employed, and this description is intended to include all such embodiments and their equivalents.

### BRIEF DESCRIPTION OF THE DRAWINGS

Having thus described embodiments of the invention in general terms, reference will now be made to the accompanying drawings, which are not necessarily drawn to scale, and wherein:
**FIG. 1** is a block diagram depiction of a system for financial account management implementing customer-defined account management rules, according to an embodiment of the present invention;
**FIG. 2** is a block diagram depiction of linked customer accounts; in accordance with embodiments of the present invention;
**FIG. 3** is a more detailed block diagram of an apparatus configured for providing a system for financial account management, in accordance with an embodiment of the present invention;
**FIG. 4** is a block diagram depiction of an alternate system for financial account management implementing financial institution-automated account management, in accordance with present embodiments;
**FIG. 5** is a flow diagram for financial institution account management highlighting customer-defined rules for ensuring adequate funding, in accordance with present embodiments;
**FIG. 6** is a flow diagram of a method for financial institution account management highlighting customer-defined rules for maximizing rate of return, in accordance with present embodiments;
**FIG. 7** is a flow diagram of a method for financial institution account management highlighting customer-defined rules for ensuring minimum account balances, in accordance with an embodiment of the present invention; and
**FIG. 8** is a flow diagram of a method for financial institution account management highlighting financial institution-automated account management, in accordance with yet another embodiment of the present invention.

### DETAILED DESCRIPTION OF EMBODIMENTS OF THE INVENTION

Embodiments of the present invention will now be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure will satisfy applicable legal requirements. In the following description, for purposes of explanation, numerous specific details are set forth in order to provide a thorough understanding of one or more embedments. It may be evident; however, that such embodiment(s) may be practiced without these specific details. Like numbers refer to like elements throughout.

Various embodiments or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures, A combination of these approaches may also be used.

The steps and/or actions of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some embodiments, the processor and the storage medium may reside in an Application Specific Integrated Circuit (ASIC). In the alternative, the processor and the storage medium may reside as discrete components in a computing device. Additionally, in some embodiments, the events and/or actions of a method or algorithm may reside as one or any combination or set of codes and/or instructions on a machine-readable medium and/or computer-readable medium, which may be incorporated into a computer program product.

In one or more embodiments, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures, and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. "Disk" and "disc", as used herein, include compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

Thus, methods, systems, computer programs and the like are herein disclosed that provide financial institution account management. According to one embodiment, financial institution account management provides for customer-defined account management rules associated with linked financial institution accounts. According to specific embodiments of the invention, the customer-defined rules may provide for maximizing the customer's rate of return and/or minimizing the likelihood of insufficient funding of an account leading to an overdraft. In this regard, maximizing the customer's rate of return is accomplished by customer-defined maximum limits for low interest bearing accounts such that amounts beyond what is needed in the account are automatically transferred to higher-interest bearing accounts. Additionally, minimizing the likelihood of insufficient funding of an account is accomplished by customer defined rules designating transfer accounts for transferring funds to a payment account if the payment account has insufficient funds to satisfy an outstanding payment. In the same regard, customer-defined minimum limits may be set on payment accounts, such as checking accounts, bill pay accounts or the like to ensure that such accounts are always properly funded. Once the customer-defined account management rules have been set, funds are automatically managed so as to eliminate any further intervention by the customer in managing the financial institution accounts.

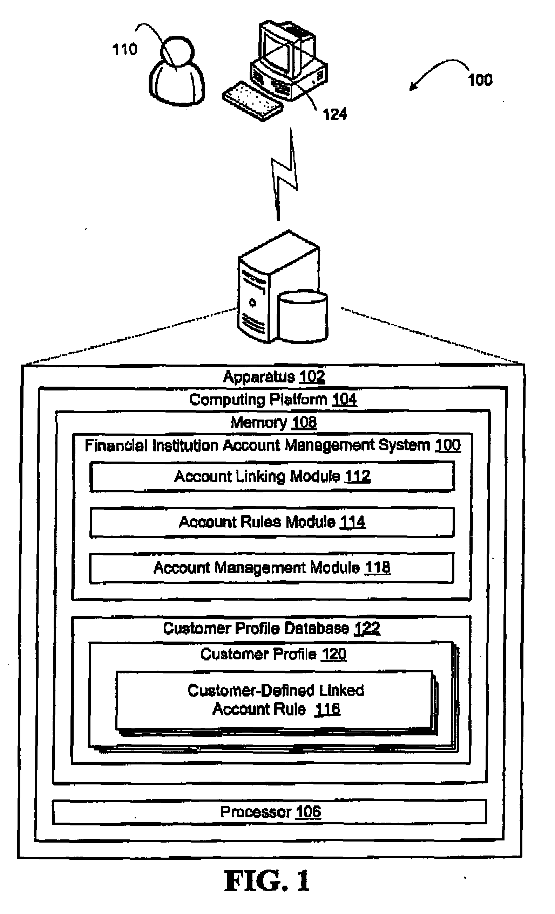

Referring to **FTG. 1,** a block diagram is depicted of a system 100 for managing financial institution accounts, in accordance with an embodiment of the present invention. The system includes an apparatus 102, which may include one and, typically, a plurality of devices in the control of a financial institution, such as a bank or the like. The apparatus 102 includes a computing platform 104 having at least one processor 106 and a memory 108. The memory 108 of apparatus 102 includes a financial institution account management system 100 that is operable to provide customers, such as customer 110, the ability to pre-configure management of one or more customer accounts. In the illustrated embodiment of **FIG. 1****,** pre-configured management is provided by customer-defined account management rules. Once the customer has defined account management rules, the account management system 100 is able to automatically manage the customer's accounts without further customer intervention.

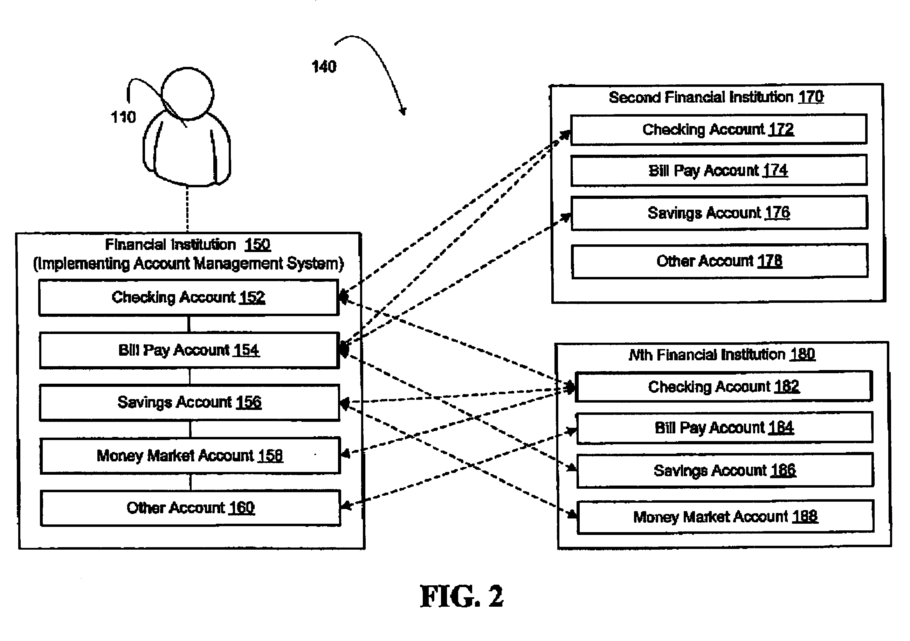

Thus, financial institution account management system 100 includes account linking module 112 that is operable to receive customer requests to link financial institution accounts and establish account links in accordance with the request. In one embodiment a link request includes the routing number and account number of the account being linked. Account links may be established between two or more customer accounts. In this regard, for example, a customer account, such as a customer checking account or the like, may have a first link established with first internal or external account, a second link with a second internal or external account and so forth. As noted, and further discussed in relation to **FIG. 2**, infra., the link may be established between internal financial institution accounts (*i.e*., accounts provided by the financial institution implementing the account management system 100) and/or between internal financial institution accounts and external financial institution accounts (*i.e*., accounts provided by other financial institutions, such as other banks, credit unions, brokerage firms, or the like).

Financial institution account management system 100 additionally includes account rules module 114 that is operable to receive one or more customer-defined account rules 116 associated with two or more linked financial institution accounts. Once the account rules are received, the account rules module 114 is further operable to store the customer-defined linked account rules 116 in a corresponding customer profile 120 in a customer profile database 122.

According to one embodiment of the invention, customer 110 may interface with the account management system 100 via a computing device 124 having a wired and/or wireless network connection 126. While the embodiment illustrated in **FIG. 1****,** depicts a personal computer (PC) as the computing device 124, in other embodiments, the computing device may take the form of any device capable of network communication, such as a laptop computer, a handheld wireless device, such as a cellular telephone, personal digital assistant (PDA) or the like. In one embodiment of the invention, the financial institution providing the account management system 100 may use the Internet, and more specifically, an online banking portal, as the platform for providing the customer access to the system 100. In this regard, customer 110 may access the account management system 100 through a financial institution's online banking site or the like to establish account links, define account management rules or perform other functions related to the account management system 100.

The customer-defined account rules may include any rule that affects the management and/or funding of financial institution accounts, including, but not limited to, minimum account balances, maximum account balances, transfer account priorities and the like. In one embodiment of the invention, the financial institution that provides the management system may provide for a repository of rules, such as the most popular customer-defined rules or bank-suggested rules, that may be accessible to the customer via the online website, such as the online banking site. In this regard, the customer-defined rules may be further defined as customer-selected rules. In a further embodiment, the bank-suggested rules may be customer-specific bank suggested rules based on the customer's current account, account funding history, purchasing/debit history and the like. In selecting rules from the repository, the repository may suggest the parameters associated with a rule, such as appropriate balances, transfer account priorities or the like, or the customer may provide the parameters. In still further embodiments of the invention, the customer may be able to define their own specific rules without the benefit of repository of rules.

According to one embodiment of the invention, one or more of the customer-defined account rules are operable to maximize the customer's rate of return associated with two or more linked accounts. In this regard, rules may be defined that establish a maximum balance limit for one or more financial institution accounts, such as lower interest bearing checking or bill pay account, and designate one or more financial institution accounts, such as a higher interest bearing savings or money market account, as the transferee account if the maximum balance limit is determined to be met.

According to another embodiment of the invention, one or more of the customer-defined account rules are operable to ensure adequate fund availability in one or more linked financial accounts for the purpose of finding an account debit/expenditure. In this regard, customer-defined rules may provide for establishing account priority for transferring funds to a payment account that is unable to properly fund a requested debit/expenditure. For example, a linked account may be established as a primary transfer account, a secondary transfer account, a tertiary transfer account or the like, for transferring funds from in the event that the linked payment account does not have sufficient funds available for a requested debit/expenditure. The transfer accounts may be savings accounts, money market accounts or the like. Additionally, the customer-defined rules may provide for establishing a minimum account balance and designating one or more linked accounts as a transferor account in the event that the established minimum balance account falls below the established minimum balance. In addition, designated transferor accounts may be prioritized to determine the transferor priority of the accounts in terms of funding the minimum balance account.

Financial institution account management system 100 additional includes account management module 118 operable to manage funds in the plurality of linked customer accounts based on the customer-defined account rules. In one embodiment, the account management module 118 performs operations for maximizing the customer's rate of return on the plurality of linked accounts. For example, the account management module 118 may be operable to determine that a customer-defined account maximum balance has been met, determine the transferee account based on a customer designated transferee or transferee priority and automatically initiate the transfer of funds in excess of the maximum balance to the designated transferee account.

In another embodiment, the account management module 118 performs operations for ensuring adequacy of fund availability in accounts for the purpose of funding debits. For example, the account management module 118 may operable to determine that a payment account is unable to fund an outstanding debit, determine the customer-defined account transfer priority, transfer funds to the payment account based on the transfer priority and initiate payment from the payment account after successfully transferring funds to the payment account. According to such embodiments, the account management module may be further operable to determine and initiate a payment hold period for the purpose of ensuring that a proper payment hold period ensues while funds are being transferred into the payment account. The payment hold period provides for a timing mechanism that protects against the payment being denied due to insufficient funds. In yet another example, the account management module 118 is operable to determine that a customer-defined minimum balance has been met, determine a customer-defined transfer account or customer-defined transfer account priority and initiate transfer of funds from the customer-defined transfer account to the minimum balance account or initiate transfer to the minimum balance account in accordance with transfer account priority.

As previously mentioned, **FIG. 2** provides a block diagram depiction of a financial institution customer's linked accounts 140, according to an embodiment of the present invention. The customer 110 has a plurality of accounts with the financial institution 150 that implements the account management system 100 (shown in **FIG. 1**). In addition, the customer 110 has other accounts with other financial institutions, designated in **FIG. 2** as second financial institution 170 and *N*th financial institution 180, which signifies the last in a series of other financial institutions. The other financial institutions may be banks, credit unions, investment services companies and the like. It should also be noted that a customer may be an individual, a domestic partnership (*i.e*., married couple or the like), or a business entity.

According to the illustrated embodiment of **FIG. 2****,** the customer 110 may have a checking account 152, a bill pay account 154, a savings account 156, a money market account 158 and another undefined account 160 with the financial institution 150 that implements the account management system 100. Additionally, the customer 110 may have a checking account 172, a bill pay account 174, a savings account 176 and another undefined account 178 with the second financial institution 170. Further the customer may have a checking account 182, a bill pay account 184, a savings account 186, a money market account 188 and another undefined account 190 with the *N*th financial institution.

In addition to having internal linked accounts (*i.e*., accounts associated with one specific financial institution), customer 110 may choose to link an internal account with an external accounts. Procedurally, linking of external accounts may include providing for a routing number and an account number associated with the linking accounts. For example, in the illustrated embodiment of **FIG. 2****,** as symbolized by the dotted-lines, checking account 152 is linked to checking account 172 and checking account 182; bill pay account 154 is linked to checking account 172, savings account 176 and savings account 186; savings account 156 is linked to checking account 182 and money market account 188; money market account 158 is linked to checking account 182; and other account 160 is linked to other account 190.

It should be noted that any one specific customer account may be linked to one or more of the customer's internal or external financial institution accounts. While the embodiment shown in **FIG. 2** depicts a maximum of three links for a given account, in practice, the number of accounts linked to any one specific account is limited only by the number of external accounts that the customer has. It is also noted, that any one specific account is not limited to being linked to only one external financial institution, but rather, may be linked to various different accounts at various different financial institutions.

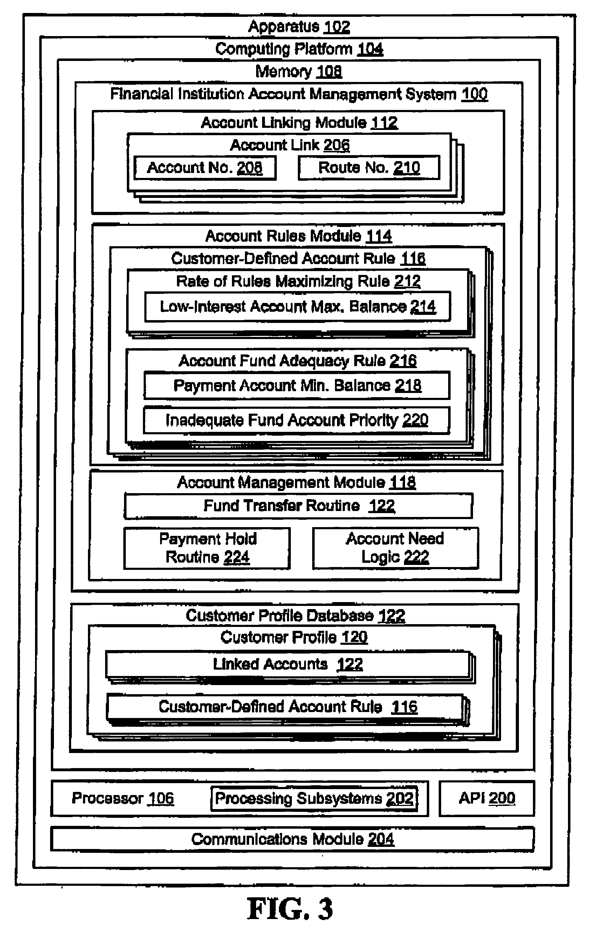

**FIG. 3** provides a more detailed block diagram depiction of the apparatus 102, in accordance with an embodiment of the present invention. In addition to providing greater detail **FIG. 3** highlights various alternate embodiments of the invention. The apparatus 102 may include any type of one or more computerized, communication devices, such as a server, a personal computer, a portable computer, or any device or devices that include a computer platform and have a wired and/or wireless connection to a network, such as the Internet, an intranet or the like.

The apparatus 102 includes computing platform 104 that can transmit data across a network, and that can receive and execute routines and applications. Computing platform 104 includes memory 108, which may comprise volatile and nonvolatile memory such as read-only and/or random-access memory (RAM and ROM), EPROM, EEPROM, flash cards, or any memory common to computing platforms. Further, memory 108 may include one or more flash memory calls, or may be any secondary or tertiary storage device, such as magnetic media, optical media, tape, or soft or hard disk,

Further, computing platform 104 also includes processor 106, which may be an application-specific integrated circuit ("ASIC"), or other chipset, processor, logic circuit, or other data processing device. Processor 106 or other processor such as ASIC may execute an application programming interface ("API") layer 200 that interfaces with any resident programs, such as financial institution account management system 100 stored in the memory 108 of the apparatus 102.

Processor 106 includes various processing subsystems 202 embodied in hardware, firmware, software, and combinations thereof, that enable the functionality of apparatus 102 and the operability of the apparatus 102 on a network. For example, processing subsystems 202 allow for initiating and maintaining communications, and exchanging data, with other networked devices, For the disclosed embodiments, processing subsystems 202 of processor 106 may include any subsystem used in financial institution account management system 100.

Computing platform 104 additionally includes communications module 204 embodied in hardware, firmware, software, and combinations thereof, that enables communications among the various components of the apparatus 102, as well as between the apparatus 102 and an external network, such as the Internet or the like. In described embodiments, the communication module 204 enables the communication of all correspondence between apparatus 102 and other computing devices, such as a customer's computing device, and is thus operable to receive customer link requests and customer-defined account management rules.

The memory 108 of computer platform 104 includes financial institution account management system 100 which is operable to manage customer accounts according to customer-defined management rules.

Thus, financial institution account management system 100 includes account linking module 112 that is operable to receive customer requests to link financial institution accounts and establish account links 206 in accordance with the requests. In one embodiment a link request includes the routing number 208 and account number 210 of the account being linked. Account links 206 may be established between two or more customer accounts. In this regard, for example, a customer account, such as a customer checking account or the like, may have a first link established with first internal or external account, a second link with a second internal or external account and so forth. Once the account links 206 have been established they are stored in the customer profile 120 associated with the customer in the related customer profile database 122.

Financial institution account management system 100 additionally includes account rules module 114 that is operable to receive one or more customer-defined account rules 116 associated with two or more linked financial institution accounts. As previously noted, in one embodiment of the invention, the customer-defined rules may be selected from a financial institution rules repository. The rules repository may present the customer with the most popular rules, customer-specific or non-customer-apecifc financial institution-suggested rules or the repository may allow the customer to search the composite repository for rule selection. In other embodiments of the invention, the financial institution implementing the account management system may provide for the customer to devise their own specific rules for account management. Once received, the account rules module 114 is further operable to store the customer-defined linked account rules 116 in a corresponding customer profile 120 in a customer profile database 122.

According to one embodiment of the invention, one or more of the customer-defined account rules 116 includes a rate of return maximizing rule 212 operable to maximize the customer's rate of return associated with two or more linked accounts. Thus, rate of return maximizing rule 212 may include low-interest bearing account maximum balance rule 214 operable to establish a maximum balance limit for one or more financial institution accounts, such as a lower interest bearing checking or bill pay account, and designate one or more financial institution accounts, such as a higher interest bearing savings or money market account, as the transferee account if the maximum balance limit is determined to be met.

In accordance with one specific embodiment, the maximum balance limit may be a predetermined specific dollar amount as determined by the customer. In other embodiments the maximum balance limit may be varying and dynamically determined based on logically determined account balance trends. In this regard, account management module 118 may include account balance need logic 222 operable to determine a perceived requisite account balance based on historical account activity, such as prior debits and expenditures. For example, account balance need logic 22 is able to determine recurring debits, such as housing payment debits (*i.e*., mortgage or rent), average monthly food expenditures, such as grocery and/or restaurant expenditures, average monthly utility debits and the like. As such, the account balance need logic 222 can estimate the needed maximum balance in an account based on previous debit history and the time of the week, month, year or the like. In turn, the low-interest bearing account maximum balance rule 214 can provide for transferring funds in excess of the estimated needed maximum balance.

According to another embodiment of the invention, one or more of the customer-defined account rules 116 includes an account fund adequacy rule 216 operable to ensure adequate fund availability in one or more linked financial accounts for the purpose of funding an account debit/expenditure. Thus, account fund adequacy rule 216 may include payment account minimum balance rule 218 operable to establish a minimum account balance and designate one or more linked accounts as a transferor account in the event that the established minimum balance account falls below the established minimum balance. In addition, the rule 218 may provide for designating an amount to transfer to the account in the event the account falls below the established minimum balance. According to one embodiment of the invention, the customer may designate one account as the transferor account, in which case, if the designated account does not have adequate funds to accommodate the necessary transfer, the transfer may not occur. In other embodiment of the invention, the customer may designate a transferor priority, such that the transfer occurs from a primary designated transferor account if the primary account has sufficient funds or, as may be designated by the customer, if sufficient funds do exist, if the transfer from the primary transferor account will not deplete the account below a designated minimum balance level. If the primary designated transferor account is unable to fund the transfer, the account management system 100 will look to the secondary transferor account to satisfy the transfer and so forth.

Account fund adequacy rule 216 may further include inadequate fund priority rule 220 for establishing account priority for transferring funds to a payment account in the event that a payment account is unable to properly fund a requested debit/expenditure. For example, a linked account may be established as a primary transfer account, a secondary transfer account, a tertiary transfer account or the like, for transferring funds from in the event that the linked payment account does not have sufficient funds available for a requested debit/expenditure. The transfer accounts may be savings accounts, money market accounts or the like. The management system will look to the primary transfer account for sufficient transfer funds or, as may be designated by the customer, if sufficient funds do exist, if the transfer from the primary transferor account will not deplete the account below a designated minimum balance level. If the primary designated transferor account is unable to fund the transfer, the account management system 100 will look to the secondary transferor account to satisfy the transfer and then to the tertiary transfer account and so forth. Additionally, the customer-defined rules may provide for transferring the entire outstanding debit amount from the transfer account, the difference between the debit amount and the current balance in the payment account, or a predetermined amount above the outstanding debit amount. Additionally, the customer may define the rule such that the entire transfer amount must occur from one transfer account as opposed to being parsed from numerous accounts in the event that the primary transfer account or any other account looked upon for transfer has insufficient funds to accommodate the entire required transfer amount.

In the event that a debit/expenditure occurs on an account having insufficient funds to accommodate the debit and, thus a transfer from a prioritized linked account is necessary, a hold period may be required to be invoked to ensure that funds are transferred to the payment account prior to making the actual payment to the third party. Thus, account management module 118 may include a payment hold routine 224 operable for implementing a hold period prior to authorizing payment from a payment account. The hold period may be a predetermined hold period applicable to all transfers or the hold period may be predetermined hold period based on the customer-defined account priority for transferring the funds and the type and location of the transferor accounts. Additionally, the hold period routine 224 may be configured to dynamically determine the hold period for each transfer based on one or more parameters affecting the transfer time, such as the type of the transferor account, the location of the transferor account, the amount of the transfer and the like.

Financial institution account management system 100 additionally includes account management module 118 operable to manage funds in the plurality of linked customer accounts based on the customer-defined account rules. Thus, in one embodiment account management module 118 includes fund transfer routine 226 operable to provide for fund transfers from plinked financial institution accounts based on the customer-defined account management rules 116.

Thus, in one embodiment, the fund transfer routine 226 may be operable to implement the low-interest account maximum balance rule 214 and, based on a determination that a customer-defined account maximum balance has been met, automatically initiate the transfer of funds in excess of the maximum balance to the customer-designated transferee account. As previously noted, in such embodiments, account balance need logic 222 may be implemented to determine the maximum balance for an account based on an estimated perceived account balance need.

In another embodiment of the invention, the fund transfer routine 226 may be operable to implement the inadequate fund account priority rule 220 and, based on a determination that a payment account is unable to fund an outstanding debit/expenditure, automatically initiate the transfer of funds to the payment account in accordance with the customer-designated transfer account priority. As previously noted, in such embodiments the payment hold routine 224 may be implemented to determine and initiate a payment hold period for the purpose of ensuring that a proper payment hold period ensues while funds are being transferred into the payment account. The payment hold period provides for a timing mechanism that protects against the payment being denied due to insufficient funds.

In still another embodiment of the invention, the fund transfer routine may be operable to implement the payment account minimum balance rule 218 and, based on a determination that a customer-defined minimum balance has been met, initiate automatic transfer of funds from the customer-defined transfer account to the minimum balance account.

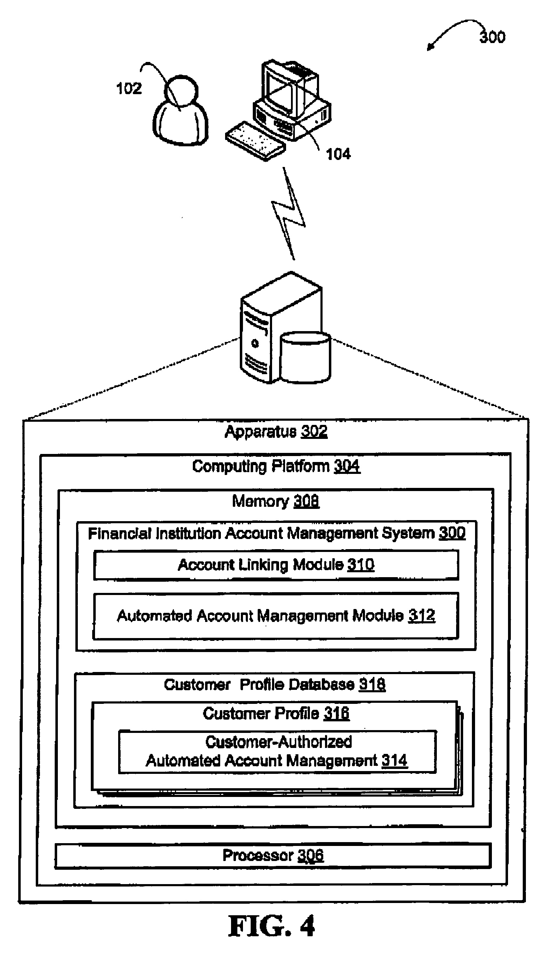

Turning the reader's attention to **FIG. 4****,** a block diagram is depicted of another alternate embodiment financial institution account management system 300, in accordance with an embodiment of the present invention. The system 300 includes an apparatus 302, which may include one and, typically, a plurality of devices in the control of a financial institution, such as bank or the like. The apparatus 302 includes a computing platform 304 having at least one processor 306 and a memory 308. The memory 308 of apparatus 302 includes a financial institution account management system 300 that is operable to provide customer 102 the ability to link a plurality of customer accounts and for the customer to authorize the management system 300 to automatically manage the account balances in the designated linked accounts.

Thus, financial institution account management system 300 includes account linking module 310 that is operable to receive customer requests to link financial institution accounts and establish account links in accordance with the requests. In one embodiment a link request includes the routing number and account number of the account being linked. As previously discussed, account links may be established between two or more customer accounts and links may be established between internal financial institution accounts and/or between internal financial institution accounts and external financial institution accounts.

Financial institution account management system 300 additionally includes automated account management module 312 that is operable to receive customer authorization to manage a plurality of linked accounts and automatically manage the balance in the account. The authorization to manage a plurality of linked accounts may include all of the customer's financial institution accounts, both internal and external or any portion of the customer's financial institution accounts. Once the authorization is received, the management module 312 is further operable to store the customer-authorized automated account management 314 in a corresponding customer profile 316 in a customer profile database 318.

According to one embodiment of the invention, the automated account management module is operable to achieve a balance between a plurality of account management benefit factors. These benefit factors may include, but are not intended to be limiting, maximizing the customer's rate of return on account funds, maintaining minimum balances in accounts requiring such and minimizing the number of transfers that occur between accounts. In general, maximizing the customer's rate of return and maintaining minimum balances in accounts are directly opposed to the concept of minimizing account transfers. Since both the financial institution and, more often, the customer may incur charges related to transfers; it is generally in the best interest of the bank and/or customer to minimize the number of transfers that occur. However, in order to maximize rate of return and ensure minimum balances, account transfers must occur. The automated account management module 312 may be configured to balance these benefit factors so as achieve the most effective account management for the customer, in terms of maximizing benefit factors while limiting account management costs.

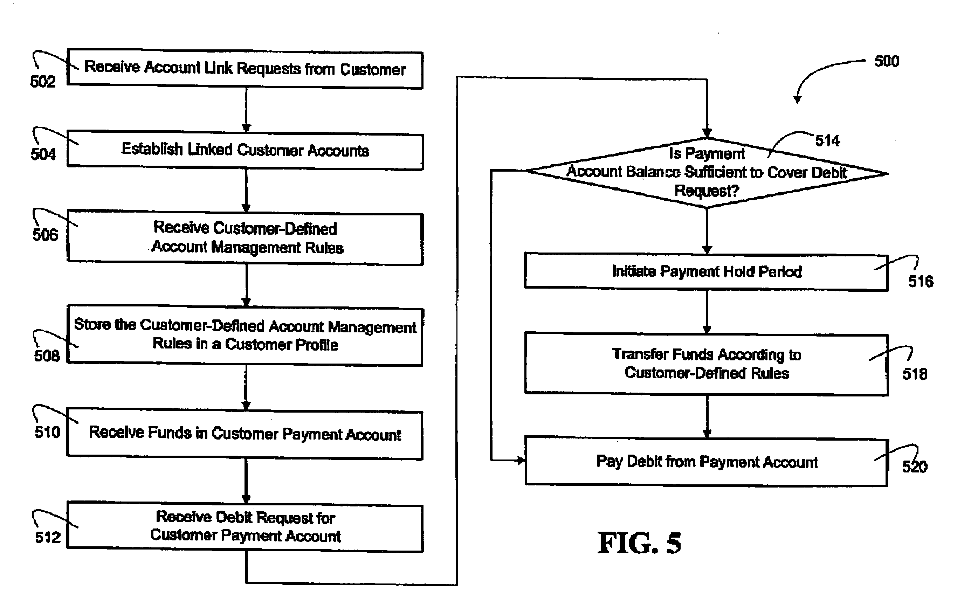

Referring to **FIG. 5****,** a flow diagram is presented of a method 500 for financial account management, in accordance with an embodiment of the present invention. At Event 502, account link requests are received from a customer. The account link requests provide for linking two or more financial institution accounts. The accounts to be linked may be internaily-based accounts or internal and external-based accounts. In one embodiment, the account link requests include an account number and a financial institution routing number. At Event 504, the account links are established based on the receive link requests and the account links are stored in a corresponding customer profile.

At Event 506, customer-defined account management rules are received. In certain embodiments, the customer-defined account management rules may be customer selected rules, selected from a financial institution repository/dalabase of rules, such as the most commonly selected/used rules or financial institution-suggested rules, which may be customer-specific. In other embodiments, the customer-defined account management rules may be rules devised by the customer based on the customer's required account management needs.

In accordance with some embodiments of the invention, one or more of the rules may be operable to ensure adequate funds are available in accounts to accommodate an account debit. In this regard, the customer may define rules that prioritize account transfers in the event that a payment account has insufficient funds and/or define minimum balances for payment accounts and rules to designate transfer accounts in the event that a minimum balance account falls below the established minimum balance.

In accordance with other embodiments, one or more of the rules may be operable to maximize the customer's rate of return. In this regard, the customer may define rules that insure that account balances are maximized in higher interest bearing accounts, such as savings, money market or the like, while minimizing the amount of excess funds in lower interest bearing accounts such as checking, bill pay or the like.

At Event 508, the received customer-defined account management rules are stored in the corresponding customer profile.

At Event 510, funds are received in a customer payment account, such as a checking account, bill pay account or the like. The funds may be received in any fashion, such as customer deposit, direct deposit of paycheck funds or the like. At Event 512, a debit request is received at the payment account. The debit request may be for customer payment (*i.e*., a withdrawal) or third party payment

At Decision 514, a determination is made as to whether sufficient funds are available in the payment account to satisfy the debit request. If sufficient funds are available in the payment account, at Event 520, payment is made from the payment account. If it is determined that insufficient funds are currently available in the payment account, at Event 516, a payment hold period is initiated. The payment hold period ensures that proper period of time is allotted for funds to transfer into the payment account before releasing payment. In one embodiment of the invention the hold period is a predetermined period of time, which may be based on the nature of the pre-configured transfer accounts, the location of the pre-configured transfer accounts, and the like, In another embodiment of the invention, the hold period may be dynamically determined based on conditions affecting the current fund transfer, such as type of transfer account, location of transfer account, amount of transfer, priority of the payment type and the like.

At Event 518, funds are transferred to the payment account via an Automated Clearing House (ACH) type transfer based on pre-determined customer-defined account management rules. In this regard, the rules may include, but are not limited to, definition of transfer account priority, the amount of funds to be transferred (*e.g.*, the exact debit request amount or an amount greater than the debit request amount), whether the transfer amount has to be satisfied from one account or whether the transfer can come from numerous accounts and the like.

At Event 520, after the funds have been transferred into the account and the hold period has been exhausted, payment is made from the payment account.

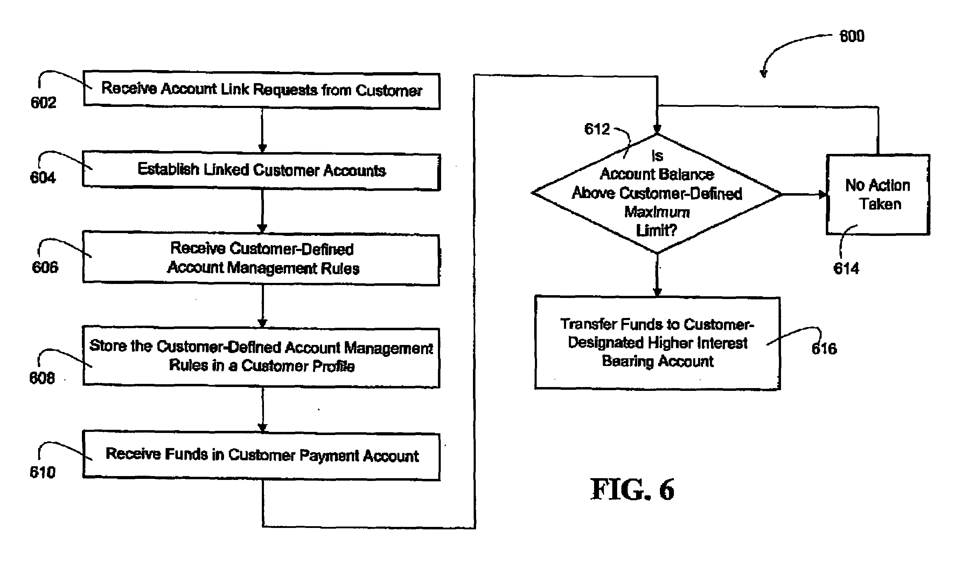

Referring to **FIG. 6****,** a flow diagram is presented of a another method 600 for financial account management, in accordance with an embodiment of the present invention. At Event 602, account link requests are received from a customer and, at Event 604, the account links are established based on the receive link requests.

At Event 606, customer-defined account management rules are received. In accordance with embodiments of the present invention, one or more of the rules may be operable to maximize the customer's rate of return. In this regard, the customer may define rules that insure that account balances are maximized in higher interest bearing accounts, such as savings, money market or the like, while minimizing the amount of excess funds in lower interest bearing accounts such as checking, bill pay or the like. At Event 608, the received customer-defined account management rules are stored in the corresponding customer profile.

At Event 610, funds are received in a customer payment account, such as a checking account, bill pay account or the like, The funds may be received in any fashion, such as customer deposit, direct deposit of paycheck funds or the like.

At Decision 612, a determination is made as to whether the account balance in a customer-designated account, typically a low interest-bearing account, such as a checking or bill pay account, has exceeded a customer-defined maximum balance. If the balance is determined to have not exceeded a customer-defined maximum balance, at Event 614, no further action is taken and the system continues to monitor account balance.

If the balance in the customer-designated account is determined to have exceeded the customer-defined maximum balance limit, at Event 616, the amount above the customer-defined maximum balance limit is transferred, via Automated Clearing House (ACH) transfer or the like, to a customer-designated account, such as a higher interest-bearing account, for example, a savings account, a money market account or like account.

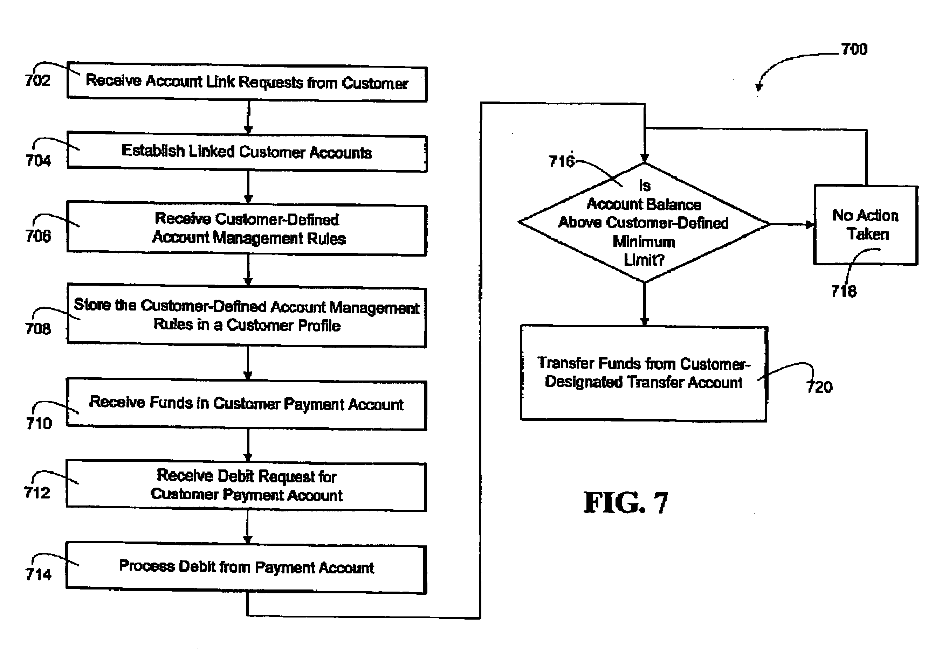

Referring to FIG. 7, another flow diagram is presented of a method 700 for financial account management, in accordance with an embodiment of the present invention. At Event 702, account link requests are received from a customer and, at Event 704, the account links are established based on the received link requests.

At Event 706, customer-defined account management rules are received. In accordance with some embodiments of the invention, one or more of the rules may be operable to ensure adequate funds are available in accounts to accommodate an account debit. In this regard, the customer may define rules that define minimum balances for payment accounts and rules to designate transfer accounts in the event that a minimum balance account falls below the established minimum balance. At Event 708, the customer-defined account management rules are stored in a corresponding customer profile.

At Event 710, funds are received in a customer payment account, such as a checking account, bill pay account or the like, The funds may be received in any fashion, such as customer deposit, direct deposit of paycheck funds or the like. At Event 712, a debit request is received at the payment account. The debit request may be for customer payment (*i.e*., a withdrawal) or third party payment. At Event 714, the debit is processed and the associated funds are withdrawn from the payment account.

At Decision 716, a determination is made as to whether the account balance in the payment account is above a customer-defined minimum limit. If the balance is determined to have not met the customer-defined minimum balance, at Event 718, no further action is taken and the system continues to monitor account balance.

If the balance in the customer-designated account is determined to have fallen below the customer-defined minimum balance limit, at Event 720, funds are transferred from a custom-defined transfer account or based on customer-defined transfer account priority. The transfer amount may be a customer-defined amount, a predetermined amount or a dynamically determined amount based on logically determined account need.

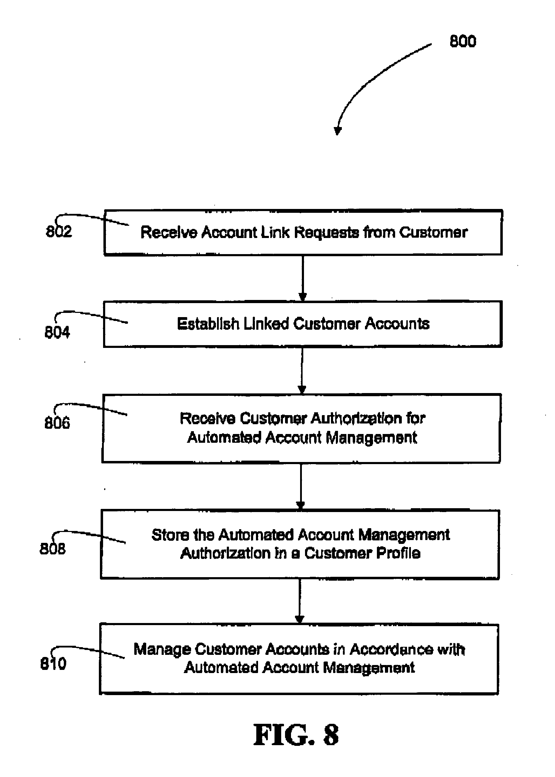

Referring to **FIG. 8****,** a flow diagram is presented of another method 800 for account management, in accordance with an embodiment of the present invention. At Event 802, account link requests are received from a customer and, at Event 804, the account links are established based on the receive link requests.

At Event 806, customer authorization is received for financial institution-automated account management of a plurality of linked customer accounts. The customer may designate all of their internal and/or external accounts for automated account management or any portion of the customer's internal and/or external accounts. At Event 808, the automated account management authorization is stored in the corresponding customer profile.

At Event 810, customer designated accounts are automatically managed by the financial institution. In this regard, automated transfers are made by the financial institution to provide for maximize rate of return on customer accounts, and to ensure that accounts maintain a minimum balance. Additionally, the automated account management system serves to limit the number of transfers so as to limit transfer costs for the financial institution and/or the customer. According to one embodiment, the automated management of accounts may serve to balance maximizing rate of return and ensuring minimum account balances while limiting the number of automated transfers between accounts.

Thus, methods, apparatus and computer program products have been described that provide for custamer-defined financial institution account management rules associated with linked financial institution accounts. The methods, systems and computer program products herein described allow the customer to define rules that maximize the customer's rate of return and/or minimize the likelihood of insufficient funding of an account leading to an overdraft. Thus, the invention seeks to solves the problem of poor utilization of cash in terms of excessive balances in non-interest bearing accounts or low-interest bearing accounts where the cash could be better served earning a higher rate of return in a different account, such as a savings, money market or other similar account. Additionally, the invention seeks to solve the problem of managing a primary payment account, such as a checking or bill account, to ensure that funds are sufficient to cover the customer's expenditures.

While the foregoing disclosure discusses illustrative embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any embodiment may be utilized with all or a portion of any other embodiment, unless stated otherwise.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other changes, combinations, omissions, modifications and substitutions, in addition to those set forth in the above paragraphs, are possible, Those skilled in the art will appreciate that various adaptations and modifications of the just described embodiments can be configured without departing from the scope and spirit of the invention. Therefore, it is to be understood that, within the scope of the appended claims, the invention may be practiced other than as specifically described herein.

## Claims

1. A method for managing financial institution accounts, the method comprising: receiving one or more financial institution account link requests, wherein each link request provides for linking two or more financial institution accounts associated with a customer; providing for one or more financial institution account links based on the one or more link requests; receiving one or more customer-defined account management rules associated with two or more of the linked financial institution accounts, wherein at least one of the customer-defined account management rules is operable to maximize the customer's rate of return associated with the plurality of linked financial institution accounts; storing the one or more account management rules in a customer profile associated with the customer; and managing funds in the plurality of linked financial institution accounts based on the account management rules.

2. The method of claim 1, wherein receiving one or more customer-defined account management rules further comprises receiving at least one account management rule that establishes a maximum balance limit for one or more financial institution accounts and designates one or more financial institution accounts as the transferee account if the maximum balance limit is met.

3. The method of claim 2, wherein receiving at least one management rule that establishes a maximum balance limit for one or more financial institution accounts further comprises receiving at least one account management rule that establishes a maximum balance limit, wherein the maximum balance limit is defined as à predetermined dollar amount or as a percentage in excess of a predetermined current need amount, optionally wherein the method further comprises determining the customer's current need amount based on previous account usage patterns.

4. The method of claim 1, wherein managing funds in the plurality of linked financial institution accounts based on the account management rules further comprises determining that the established maximum balance limit associated with a financial institution account has been met, and automatically transferring funds in excess of the maximum balance limit to the designated financial institution transferee account based on the maximum balance limit having been met.

5. The method of claim 1, wherein receiving one or more customer-defined account management rules further comprises receiving at least one account management rule that establishes a minimum balance limit for one or more financial institution customer accounts and designates a financial institution account priority for transferring funds from a prioritized financial institution account if the established minimum balance limit is met, optionally wherein managing funds in the plurality of linked financial institution accounts based on the account management rules further comprises determining that the minimum balance limit associated with a financial institution account has been met, determining the designated financial institution account priority for transferring funds to the financial institution account and transferring funds to the financial institution account in accordance with the designated financial institution account priority.

6. The method of claim 1, wherein receiving one or more customer-defined account management rules further comprises receiving at least one account management rule that establishes financial institution account transfer priority for one or more payment accounts if the payment account is unable to fund an expenditure, optionally wherein receiving one or more customer-defined account management rules further comprises receiving at least one account management rule that establishes financial institution account transfer priority for one or more payment accounts based on payment account type.

7. The method of claim 10, wherein managing funds in the plurality of linked financial institution accounts based on the account management rules further comprises determining that the payment account is unable to fund an expenditure, determining the established financial institution account transfer priority for the payment account, transferring funds to the payment account based on the transfer priority and providing payment for the expenditure after transferring funds to the payment account.

8. The method of claim 1, wherein receiving the one or more financial institution account link requests further comprises receiving one or more financial institution account link requests, wherein one or more of the link requests provide for linking financial institution accounts associated with more than one financial institution and/or wherein receiving one or more financial institution account link requests further comprises receiving one or more financial institution account link requests, wherein each link request provides for linking two or more financial institution accounts associated with an individual customer or a business customer, optionally wherein the two or more financial institution accounts include one or more of checking accounts, savings accounts, money market accounts, or online banking accounts.

9. The method of claim 1, receiving one or more customer-defined account management rules further comprises receiving one or more customer-selected account management rules selected from a financial institution repository of account management rules, optionally wherein receiving one or more customer-selected account management rules further comprises receiving the one or more customer-selected account management rules selected from a financial institution repository that provides for prioritizing the presentation of rules based on customer rule popularity and/or based on financial institution recommendation, wherein the recommendation is customer-specific.

10. An apparatus for managing financial institution accounts, the apparatus comprising: a computer platform including at least one processor and a memory; a customer profile database stored in the memory; an account linking module stored in the memory, executable by the at least one processor, and operable to receive one or more financial institution account linking requests and provide for one or more financial institution links, wherein each link provides for linking two or more financial institution accounts associated with a customer, an account rules module stored in the memory, executable by the at least one processor, and operable to receive one or more customer-defined account rules associated with two or more of the linked financial institution accounts and store the rules in a customer profile associated with the customer, wherein at least one of the customer-defined account rules is operable to maximize the customer's rate of return associated with the two or more of the linked financial institution accounts; and an account management module stored in the memory, executable by the at least one processor, and operable to manage funds in the plurality of financial institution customer accounts based on the account rules.

11. The apparatus of claim 10, wherein the account rules module is further operable to receive at least one account management rule that establishes a maximum balance limit for one or more financial institution accounts and designates one or more financial institution accounts as the transferee account if the maximum balance limit is met, optionally wherein the account rules module is further operable to receive at least one account management rule that establishes a maximum balance limit, wherein the maximum balance limit is defined as a predetermined dollar amount,

12. The apparatus of claim 10, wherein the account rules module is further operable to receive at least one account management rule that establishes a maximum balance limit, wherein the maximum balance limit is defined as a percentage in excess of a determine current need amount, optionally wherein the account management module is further operable to determine the customer's current need amount based on previous account usage patterns.

13. The apparatus of claim 12, wherein the account management module is further operable to determine that the established maximum balance limit associated with a financial institution account has been met, and automatically transfer funds in excess of the maximum balance limit to the designated financial institution transferee account based on the maximum balance limit having been met.

14. The apparatus of claim 10, wherein the account rules module is further operable to receive at least one account management rule that establishes a minimum balance limit for one or more financial institution customer accounts and designates a financial institution account priority for transferring funds from a prioritized financial institution account if the established minimum balance limit is met, optionally wherein the account management module is further operable to determine that the minimum balance limit associated with a financial institution account has been met, determine the designated financial institution account priority for transferring funds to the financial institution account and transfer funds to the financial institution account in accordance with the designated financial institution account priority.

15. The apparatus of claim 14, wherein the account rules module is further operable to receive at least one account management rule that establishes financial institution account transfer priority for one or more payment accounts if the payment account is unable to fund an expenditure, optionally wherein the account management module is further operable to determine that the payment account is unable to fund an expenditure, determine the established financial institution account transfer priority for the payment account, transfer funds to the payment account based on the transfer priority and provide payment for the expenditure after transferring funds to the payment account.

16. The apparatus of claim 10, wherein the account linking module is further operable to receive one or more financial institution account link requests and provide for one or more account links, wherein one or more of the link requests provide for linking financial institution accounts associated with more than one financial institution.
